# EUROPEAN PATENT APPLICATION

(11) **EP 2 717 552 A1**
(43) Date of publication of application: **09.04.2014**
(21) Application number: 12187142.0
(22) Date of filing: 04.10.2012
(51) Int. Cl.: H04M 1/725, G06K 19/073, G06Q 20/32

(54) **A portable proximity wireless communication device**

(71) Applicant: Nagravision S.A., 1033 Cheseaux-sur-Lausanne (CH)
(72) Inventor: Wendling, Bertrand, 01220 Divonne-les-Bains (FR)
(74) Representative: Leman Consulting S.A.

(57) **Abstract**

An embodiment of the present invention may be deployed in a mobile payment device configured to communicate with a payment terminal via an RF near-filed communication channel. The payment device comprises a sensor to detect and log usage parameters corresponding to behaviours of the user of the payment device. Sensors may take the form of any from movement sensors, light sensors or orientation sensors for example. In order to prevent inadvertent execution of a payment instruction from the terminal, the log of parameters created due to the user's behaviours is compared with a predetermined set of parameters compatible with a user's expected behaviours should he be intentionally performing payment behaviours and payment is only authorised if a match is achieved.

## Description

### TECHNICAL DOMAIN

The present invention relates to the domain of portable wireless communications and is of particular relevance to a portable payment device configured to operate according to a near-field communication standard (NFC).

### STATE OF THE ART

The state of the art includes a number of different types of contactless portable consumer devices such as smart cards, key fobs, radio frequency identification devices (RFID devices), cellular phones and the like. Such devices are designed to provide convenient mobile payment through a contactless interface simply by placing the device within range of a suitable payment terminal. Such devices are also known as mobile payment devices and form part of the family of what is generally known as mobile wireless communication devices. Ranges are chosen to be suitably short, as opposed to other mobile wireless communication devices such as telephones, and can be up to 20cm. Such ranges are generally described as being short-ranged or near-field and are thus limited in order to provide a certain amount of security, guaranteed simply by the fact that only payment terminals within such range would be capable of communicating with the device. Such devices are typically used for so called micro-payments as a replacement for cash payments amounting to small sums of say up to tens of dollars for example.

Such portable consumer devices however present a problem in that while every effort is made to simplify the execution of such micro-payments, this leaves the device vulnerable to inadvertent execution of payments. For example when such is a device is realised as an near-field communication device (NFC), where the device and the terminal simply have to be within range for a communication to take place, and thereby a payment execution to take place, there is no guarantee that such execution would necessarily be made with the express knowledge of the device owner/user. In a crowded bus for example, just by bumping into a user of a portable consumer device or even from a more remote distance, it may be possible for an unscrupulous third party to cause his unauthorised payment terminal to enter into collision with the user's device with a force suitable to launch the execution of a payment without the user's knowledge.

A portable payment device, which is proposed as a solution to the above problem, is described in United States Patent Application Publication number 2007/0040030A1. This publication discloses a portable payment device which includes a signal-disrupting portion, or shield, which is mounted on the device in such a way that it may be rotated into a first position, which allows RF signal communication between the device and a payment terminal. The shield may further be rotated into a second position which substantially disrupts an RF signal such that communication between the device and a payment terminal may not take place. As long as the user ensures to move the shield to the second position he will be safe from would-be pirates. However, in the case that the device user forgets to move the shield into such a position he is again vulnerable to a piracy attack.

Another approach at solving the problem is proposed in the state of the art in the guise of United States Patent Application Publication number 2008/0256642A1. In this case the author proposes a solution whereby in order for a contactless payment of the type described above to be carried out, it is necessary for the user of the portable payment device to be touching the device in a particular manner while the execution of the payment is being made. In order to accomplish this, the device comprises a suitably positioned fingerprint detector to detect the user's finger, a memory to store an authenticated copy of the user's fingerprint and a processor to analyse the fingerprint detected by the fingerprint detector and to compare the result of the analysis with the stored version, the device allowing the execution to take place only under the condition that the comparison is positive. This solution presents an inconvenience whereby the authenticated user (the user whose fingerprint is stored in the memory), desirous to lend his device to a friend to carry out a micro-payment on his behalf, would either not be able to do so at all or would need to reprogramme his device to accept a fingerprint of his friend as being authentic for authorising a payment. Such a system also has the disadvantage that it must include more or less sophisticated means for analysing the fingerprints, with the resulting risks of error depending on the level of sophistication. The mere fact that such complicated authentication needs to be carried out negates the advantage of having a payment device as a convenient and simple means for making micro-payments.

### BRIEF SUMMARY OF THE INVENTION

The above overview of the prior art shows that the state of the art comprises solutions to reduce the risk of a transaction being carried out on a user's portable payment device using short-range wireless communication techniques without the knowledge of the user. This type of attack is generally known as "proximity fraud". The solutions include the addition of a shield to the device, the shield being movable from a protection position to an open position, wherein the user has to ensure that the shield is in the protection position when the device is not to be used. The solutions also include strong authentication to make sure that transactions may only be carried out if the user himself has his finger placed on a specific part of the device allowing his fingerprint to be scanned and analysed. This solution however is resource intensive and could be seen to be overly complicated for a situation where the device is used to facilitate micro-payments. The user may for example lend his device to someone else to make payments on his behalf, in which case the level of protection required would simply be that the person who will make the payment in the end, whether it be the user or the user's proxy, should simply be aware that a payment is being made using the device. By "micro-payments" it is understood that such payments represent small values and therefore less stringent security is required regarding authorisation/authentication of who issues the payment. The main object again is just that the user of the device be aware or at least conscious of the fact that a payment is being made.

In view of the existing prior art therefore, there remains a need to have a simple yet effective means for preventing the execution of payments between a portable payment device and a payment terminal without the knowledge of the user of the device. What is required is a cheap, simple solution allowing the user to retain the simplicity of payments afforded by such devices while providing adequate security such that the user knows when a payment is about to be made and wherein the user does not have to remember to engage or release any protection mechanisms. To this end the present invention provides for a portable proximity wireless communication device for performing at least one transaction between the device and a payment terminal, the device comprising:
an antenna at least for receiving a radio frequency signal from the payment terminal, the radio frequency signal comprising at least one instruction to perform the transaction; and
a processor configured at least to process the instruction;
the device **characterised in that**:
it further comprises an environment sensor, operably connected to the processor, to sense at least one effect caused by at least one passive behaviour of a user of the device; and
the processor is further configured to compare the sensed effect with a reference effect corresponding to a predetermined payment behaviour and to allow the transaction to be performed only if the sensed effect matches the reference effect.

According to a further aspect of the present invention, there is provided a method for performing at least one transaction between the portable proximity wireless communication device according to claim 1, the method comprising:
detecting, with the antenna, a radio frequency signal from a payment terminal, the radio frequency signal comprising at least one instruction to perform the transaction;
sensing at least one effect caused by at least one behaviour of a user of the device;
comparing, with the processor, the sensed effect with a reference effect corresponding to a predetermined payment behaviour;
executing, with the processor, the instruction to perform the transaction if the comparison is positive.

### BRIEF DESCRIPTION OF THE DRAWINGS

The present invention will be better understood thanks to the detailed description which follows and the accompanying drawings, which are given as non-limiting examples of embodiments of the invention, wherein:
Figure 1 illustrates a system comprising a payment device in which an embodiment of the present invention may be deployed.

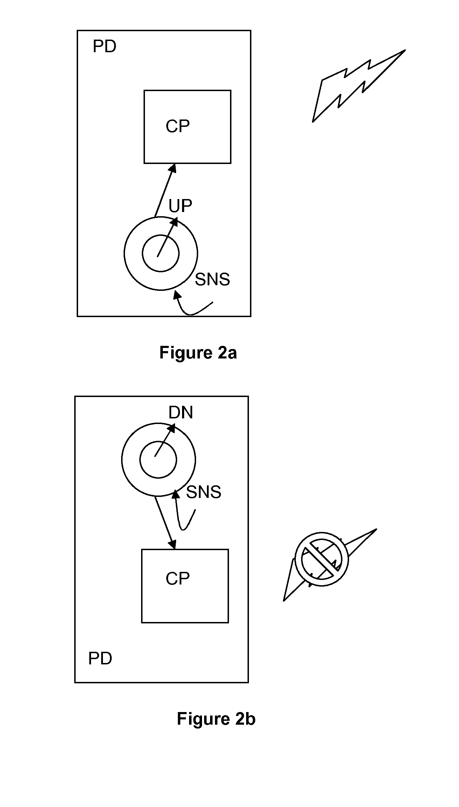

Figure 2a and Figure 2b illustrate a portable payment device comprising an orientation sensor, where the portable payment device is in an orientation in which a transaction is allowed and in an orientation in which a transaction is disallowed, respectively according to embodiments of the present invention;

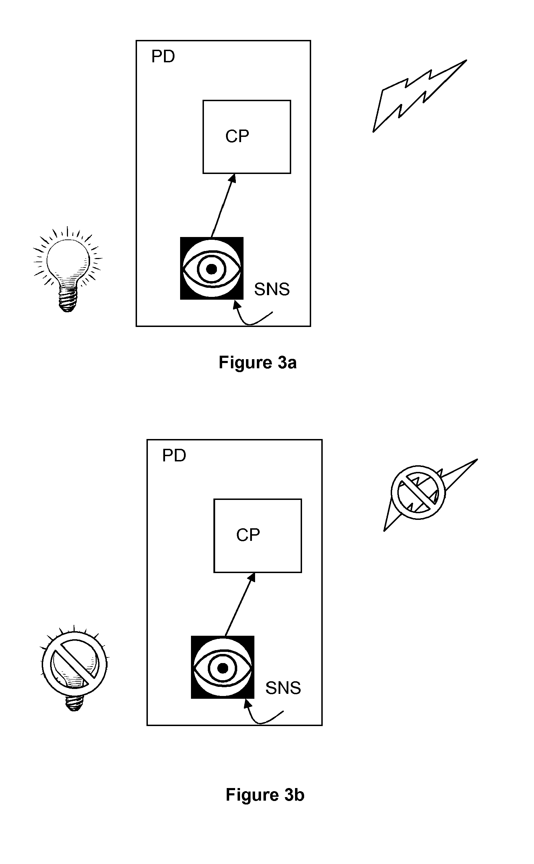

Figure 3a and Figure 3b illustrate a portable payment device comprising a light sensor, where the portable payment device is in an environment in which a transaction is allowed and in an environment where a transaction is disallowed, respectively according to embodiments of the present invention.

### DETAILED DESCRIPTION

It is desirable for a user of a portable payment device for recording or otherwise accounting for a transaction or purchase in respect of goods received or services rendered, the portable consumer device being in the form of a card, a key or an RFID device, for example, comprising contactless communication means towards a terminal, to be able to take advantage of the flexibility and simplicity afforded by such devices in respect to the ease of carrying out such transactions. Usually such devices are used to perform micro-payments i.e. payments which involve small sums of money in the range of from a fraction of a dollar to a few tens of dollars for example. For such small sums it is generally felt that the strong security usually associated with events involving the transfer of hundreds or thousands of dollars for example, may be forfeited in exchange for ease of use. It is thus desirable to have a relatively simple form of security around these portable payment devices while allowing simple recording or otherwise accounting for such small transactions. Another example of a portable payment device according to the present invention is a mobile telephone, wherein the contactless communication means referred to above is a near-filed communication means which is different from the wireless communication means used to perform telephone conversations or data communications using SMS or internet-based communication means.

According to a first embodiment of the present invention, an aim is to prevent an unscrupulous third party having a terminal configured to be able to enter into communication with a nearby portable payment device from doing so in a fraudulent manner. By fraudulent manner it means in a manner which would cause the portable payment device to execute a payment without any goods or services being provided as a result of the transaction or simply in a manner whereby the user of the portable payment device is simply not aware that such a transaction has taken place or has otherwise not intended to make the transaction or authorise the transaction to be made.

To this end there is provided a portable payment device comprising a contactless interface such as an RF wireless interface configured to be able to receive RF signals from a payment terminal within a range of up to some 10's of centimeters for example. Such payment devices, otherwise called portable proximity wireless communication devices, are known and include devices such as NFC compatible devices (Near Field Communication) for example. As is generally known, proximity communication devices described above are not configured to be able to function across distances larger than a few 10's of centimeters. Nevertheless, if an unscrupulous third party wanted to establish a communication channel with one such proximity communication device without the knowledge of the user of the device, then the third party could find advantage in using a "pirate" payment terminal adapted to operate at ranges well above the intended range of an NFC device for example. In such cases he could use a terminal with an antenna adapted to operate at up to several metres in range from the payment device. The third party would then advantageously be able to avoid arousing suspicion simply by not being present within the range expected for an intentional communication channel to be established. According to the present invention the device further comprises a sensor. In all embodiments of the present invention the sensor can be described as being an environment sensor in the sense that it is configured to sense at least one effect brought about by the user's environment or his passive behaviour. By passive behaviour it is meant behaviour not actively performed with the direct goal of causing the sensor to register an effect. Passive behaviours detectable by environment sensors according to the present invention therefore exclude behaviours such as clicking on an "OK" button, allowing a retina scan to be taken or any other behaviour whose intent is primarily to provide authentication or otherwise generate the effect in the sensor. Environment sensors are adapted to sense, for example, movement which is part of a movement someone would normally make when intending to make a payment, ambient light, how the device is held (upside down or right way up) or where the person is standing at the time of payment - in front of a known payment terminal or elsewhere).

According to an embodiment of the present invention, the sensor is a light detector for example. In normal use it is assumed that during the time that a payment device is in a pocket, it can be assumed that the user does not intend to use his portable payment device to carry out a transaction. The device is therefore configured to block any transactions which a payment terminal within the required range may attempt to initiate or otherwise perform an execution of a payment while the device does not receive light above a predetermined threshold, under the assumption that if the device is in a pocket or otherwise out of view, then the user probably does not intend for the device to perform any payments. The blocking may be performed by acting on the receiver or the processor to stop the transaction being carried out whenever the signal from light detector or other means for detecting light is below a predetermined threshold. Light levels above the predetermined threshold would correspond to a user not concealing his payment device in a pocket or a wallet for example and therefore giving consent for a payment to be made or at least being aware that a payment is being made.

According to another embodiment of the present invention, a geographical position detector such as a GPS detector can be used as a sensor. The GPS detector can give a reading of the device's geographical position whenever a command to make a payment is received. By having the processor compare the read position with a predetermined list of positions of trusted payment terminals it can be ensured that the payment is only allowed if the actual reading matches a position of one of the trusted payment terminals, thereby indicating that the user is near a payment terminal and therefore any payment made at that time is likely to be carried out with the user's knowledge. Payment is blocked if the reading from the GPS detector gives a position which does not correspond to a trusted payment terminal.

According to still another embodiment of the present invention, the sensor could be a movement detector, such as an accelerometer, to detect whenever the payment device is moving. Since under normal circumstances, when the user wishes to make a transaction he will normally be in a position near a payment terminal, holding the payment device in a manner where the terminal and the device will be able to communicate with each other. As such, the user, and therefore the device will be stationary. The device is configured such that if the sensor detects movement, then the transaction is not allowed to take place. It is assumed that a user on the move is not expecting to use his payment device to make a transaction and so if the sensor detects movement, then transactions are blocked.

According to yet another embodiment of the present invention the sensor is an orientation detector. In the case where the payment device were comprised on a credit card shaped card, for example, it is reasonable to assume that while in a pocket or in a wallet the card would not be in a horizontal position or orientation for example. It would therefore be convenient to include a simple constraint in a method for making transactions using the payment device, that the device be held in a horizontal orientation during the transaction thus ensuring that the user need actively participate in making the transaction and thereby minimising the risk of a transaction being carried out without his knowledge. A payment device could be comprised on a credit card sized card or within a mobile phone for example. It is therefore usual to expect that when the device is concealed, indicating that the user has not specifically prepared it to perform a transaction, the device will most probably not be in a horizontal orientation since such an orientation, inside a pocket or a wallet, would be very uncomfortable for the user. The orientation detector could be used to provide detection of whether or not the user is holding the device at a particular predetermined angle with respect to a plane of the payment terminal or with respect to any other predetermined angle or plane. For example, the terminal is at 45 degrees to the horizontal and the device should be held parallel to the plane of the terminal with a tolerance of 10 degrees for payment to be allowed. Both orientation detectors and movement detectors are known in the state of the art and may be conveniently made using an accelerometer for example.

Another embodiment of the present invention, which is made possible by combining the notions of movement and orientation, both described above, uses the assumption that the user of the payment device may actively remove his device from a pocket or a bag and present it near the payment terminal indicating that at that time he is aware that payment is being made or is about to be made with his device. In such a case, the device is configured to allow payment only if a movement is first detected, followed by no movement and provided that the device is detected as being held in a predetermined orientation and to block payment if the combination of those conditions is not met. Predetermined times for how long movement is detected, how long no movement is detected and how long the device is held in the predetermined orientation can be programmed into the device to be included in the combination. Similar combinations can be made by including detection parameters related to geographical position.

According to another embodiment of the present invention, the presence or absence of an RF field for carrying the signal giving the instruction could be used at least as one of the effects to be sensed from sensors. This information could be combined with information from other sensors as described above. For example, to prevent a case of false payment due to an unscrupulous third party using a "false" payment terminal having a long range field to send a payment instruction to a payment device while the user of the devices passes by on a train for example, it could be required that the various detectors detect the following sequence of behaviours for example: absence of NFC signal and device moving; presence of NFC and device stops moving; payment signal then received.

In more general terms, given that a portable wireless communication device suitable for use in carrying out a transaction with a payment terminal will usually be carried on a user's person, either in a pocket, in a bag or in a wallet for example, the user will exhibit a certain number of behaviours depending on what he is doing and, if the portable device is suitably fitted with one or more appropriate sensors, such behaviours will cause the sensor(s) to produce one or more effects which can be logged by the device. These behaviours may be described as non-payment behaviours. Moreover, if the user is actively and knowingly carrying out a transaction with his payment device he may exhibit any from a restricted number of predetermined behaviours, any or all of which he would not exhibit if he were not actively carrying out a transaction using his payment device. These behaviours are described as being payment behaviours. According to embodiments of the invention then, a predetermined set of payment behaviours are defined as forming part of normal behaviour while carrying out a transaction using a payment device. Alternatively, or in combination, a second predetermined set of behaviours are defined as forming part of abnormal behaviours while carrying out a transaction using a payment device or simply as non-payment behaviours. It is convenient and sufficient then to arrange for a portable device, fitted with one or more appropriate sensors, to detect the user's behaviours and to compare them with a predetermined set of payment behaviours and to allow the device to execute a requested transaction and to disallow execution of the requested transaction if the user's behaviours do not match the predetermined payment behaviours. On the other hand, if the device detects any from the set of non-payment behaviours, then it could be arranged for the device to prohibit the transaction from being executed. In this way payments are allowed if the device determines that the user's behaviours correspond to a normal payment behaviour pattern and blocked if the device determines that the user's behaviours do not correspond to a normal payment behaviour pattern.

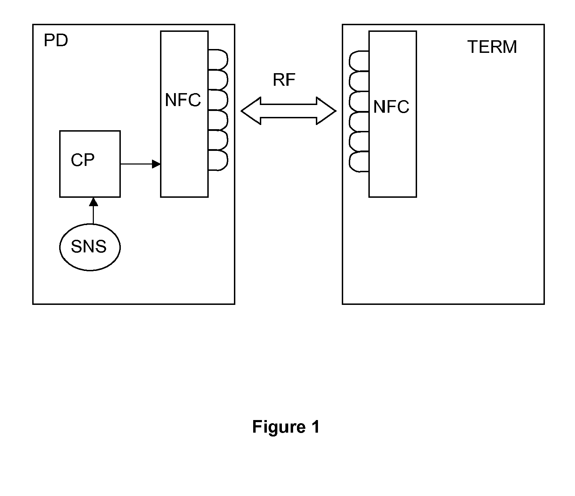

Figure 1 shows a block diagram of a system in which an embodiment of the present may be deployed. According to such an embodiment of the present invention, the transaction is carried out via a communication link which is established between the portable wireless proximity communication device and a payment terminal. The communication link is a radio frequency (RF) link of a near-field communication type (NFC). The device therefore comprises a near-field RF communication module. The payment terminal also comprises a near-field communication module. During communication, wireless RF coupling is established between the device and the terminal using coupling elements in the terminal and in the device. The coupling elements may be of capacitive type, inductive type or electromagnetic type. In the case of an embodiment configured to communicate using NFC, such coupling is electromagnetic, using inductive coupling. Typically, a coupling element is an antenna, generally a loop, configured to generate or to receive an RF signal. The antenna can therefore generate a magnetic field and coupling can be established between the device's antenna and a payment terminal's antenna. RF frequencies in the 10's of Megahertz range are generally used.

According to yet another embodiment, the payment device may be comprised within a portable telephone. According to any of the embodiments described, the device may further comprise a memory at least to store data related to the predetermined behaviours. The data related to the predetermined behaviours may be in encrypted format to prevent third parties form obtaining access to it. In this case the device would also comprise a decryption module. The device may further comprise a security module at least to store decryption keys to decrypt the encrypted data related to the predetermined behaviours.

The sensor will register a certain number of effects depending on the user's behaviours. The device according to the invention is configured to create a log of these effects and to compare at least part of the log with the stored predetermined effects corresponding to expected payment behaviours or expected non-payment behaviours.

In use, the payment device functions as follows: a set of predetermined characteristics corresponding to behaviours deemed to be compatible with performing a payment using the payment device is stored in encrypted format in a memory in the payment device; a log of user's actual behaviours is kept in a log memory of the device, the log being based on output from the sensor; when a terminal within the near-field range enters into communication with the payment device and attempts to cause the device to perform a payment, at least part of the log of user's actual behaviours is compared with the stored predetermined behaviours using the security module at least to provide the decryption key to decrypt the stored predetermined behaviours; if the part of the log corresponds to the predetermined behaviours, then payment is allowed. If the compared actual behaviours do not correspond with the predetermined behaviours, then payment is blocked.

## Claims

1. A portable proximity wireless communication device for performing at least one transaction between the device and a payment terminal, the device comprising:
an antenna at least for receiving a radio frequency signal from the payment terminal, the radio frequency signal comprising at least one instruction to perform the transaction; and
a processor configured at least to process the instruction;
the device **characterised in that**:
it further comprises an environment sensor, operably connected to the processor, to sense at least one effect caused by at least one passive behaviour of a user of the device; and
the processor is further configured to compare the sensed effect with a reference effect corresponding to a predetermined payment behaviour and to allow the transaction to be performed only if the sensed effect matches the reference effect.

2. The portable proximity wireless communication device according to claim 1, wherein the device is further **characterised in that** the processor is further configured to disallow the transaction from being performed if the sensed effect does not match the reference effect.

3. The portable proximity wireless communication device according to either of the preceding claims, wherein the device is further **characterised in that** the processor is further configured to further compare the sensed effect with a further reference effect corresponding to a predetermined non-payment behaviour and to disallow the transaction from being performed if the sensed effect matches the further reference effect.

4. The portable proximity wireless payment device according to any of the preceding claims, wherein the reference effect or the further reference effect are represented by a reference set of data or a further reference set of data, respectively, and wherein the device further comprises a memory to store the reference set of data or the further reference set of data, said reference set of data or further reference set of data being in encrypted format.

5. The portable proximity wireless payment device according to any of the preceding claims, wherein the device further comprises a security module to store at least one decryption key to decrypt the reference data or the further reference data.

6. The portable proximity wireless payment device according to any of the preceding claims, wherein the environment sensor comprises any of:
a light detector configured to sense a level of light reaching the device, wherein the processor is configured to compare the sensed level of light with a predetermined light threshold;
an orientation detector configured to sense an orientation of the device, wherein the processor is configured to compare the sensed orientation with at least one predetermined plane;
a geographical position detector configured to sense a geographical position of the device, wherein the processor is further configured to compare the sensed geographical position with at least one predetermined geographical position of a trusted payment terminal; and
a movement detector configured to sense a movement of the device, wherein the processor is configured to compare the sensed movement with a predetermined movement.

7. The portable proximity wireless payment device according to any of the preceding claims, wherein the antenna is a wire loop configured at least to detect the radio frequency.

8. The portable proximity wireless payment device according to any of the preceding claims, wherein the antenna is configured to receive the radio frequency signal up to a distance of 20cm from the payment terminal.

9. A method for performing at least one transaction between the portable proximity wireless communication device according to claim 1, the method comprising:
detecting, with the antenna, a radio frequency signal from a payment terminal, the radio frequency signal comprising at least one instruction to perform the transaction;
sensing at least one effect caused by at least one passive behaviour of a user of the device;
comparing, with the processor, the sensed effect with a reference effect corresponding to a predetermined payment behaviour;
executing, with the processor, the instruction to perform the transaction if the comparison is positive.

10. The method according to claim 9, the method further comprising preventing execution of the instruction if the comparison is negative.

11. The method according to either of claims 9 or 10, the method further comprising:
further comparing, with the processor, the sensed effect with a further reference effect corresponding to a predetermined non-payment behaviour;
preventing execution of the instruction if the further comparison is positive.
